Europäisches Patentamt

European Patent Office

Office européen des brevets

(19)

(11) Veröffentlichungsnummer: **0 145 984**
A1

# (12) EUROPÄISCHE PATENTANMELDUNG

(21) Anmeldenummer: **84113926.4**

(22) Anmeldetag: **17.11.84**

(51) Int. Cl.⁴: **C 22 B 34/12**, C 01 G 23/053

(30) Priorität: **30.11.83 DE 3343257**

(43) Veröffentlichungstag der Anmeldung: **26.06.85**
**Patentblatt 85/26**

(84) Benannte Vertragsstaaten: **BE DE FR GB IT NL**

(71) Anmelder: **BAYER AG, Konzernverwaltung RP**
**Patentabteilung, D-5090 Leverkusen 1 Bayerwerk (DE)**

(72) Erfinder: **Lallach, Günter, Dr., Bodelschwinghstrasse 23,**
**D-4150 Krefeld (DE)**
Erfinder: **Gerken, Rudolf, Dr., Ratherstrasse 79,**
**D-4150 Krefeld (DE)**
Erfinder: **Wiederhöft, Gerhard, Im Heggelsfeld 22,**
**D-4150 Krefeld (DE)**
Erfinder: **Gütsche, Walter,**
**Johannes-Heynen-Strasse 16, D-4150 Krefeld (DE)**
Erfinder: **Müller, Wolfgang-Dieter, Dr.,**
**Bodelschwinghstrasse 19, D-4150 Krefeld (DE)**

(54) **Verfahren zur Herstellung von Titandioxid.**

(57) Die vorliegende Erfindung betrifft ein Verfahren zur Herstellung von Titandioxid nach dem Sulfatverfahren durch Aufschluß von titanhaltigen Rohstoffen mit Schwefelsäure und anschließender Titanylsulfathydrolyse und Aufkonzentrierung der dabei anfallenden metallsulfathaltigen Dünnsäure zwecks Rückführung in den Aufschluß.

BAYER AKTIENGESELLSCHAFT    5090 Leverkusen, Bayerwerk

Konzernverwaltung RP
Patentabteilung    St/Kü-c    29. Nov. 1983

## Verfahren zur Herstellung von Titandioxid

Die Erfindung betrifft ein Verfahren zur Herstellung von Titandioxid nach dem Sulfatverfahren durch Aufschluß von titanhaltigen Rohstoffen mit Schwefelsäure und anschließender Titanylsulfathydrolyse, wobei die dabei anfallende metallsulfathaltige Dünnsäure zwecks Rückführung in den Aufschluß aufkonzentriert wird.

Bei der Herstellung von Titandioxid nach dem Sulfatverfahren fällt eine metallsulfathaltige Schwefelsäure - sogenannte Dünnsäure - an. Die schadlose Beseitigung der Metallsulfate stellt eine wesentliche wirtschaftliche Belastung des $TiO_2$-Produktionsprozesses dar. Dabei wirkt sich besonders nachteilig aus, daß diese Sulfate in Abhängigkeit von ihrem Gehalt an Eisen-, Aluminium- und Magnesiumsulfat nach einer Vakuumfiltration noch zwischen 20 und 35 % $H_2SO_4$ enthalten.

Der $H_2SO_4$-Gehalt kann durch eine mechanische Nachentwässerung auf 28 bis 15 % gesenkt werden. Durch eine Verdrängungswaschung ergibt sich eine weitere Verminderung auf 15 bis 8 %.

Le A 22 658

Aber auch dieser Restgehalt bedeutet in diesem großtechnischen Prozeß eine erhebliche Menge Schwefelsäure,
deren Anwesenheit einerseits erhebliche Kosten bei
der schadlosen Sulfatbeseitigung bedingt, die andererseits beim Rohstoffaufschluß durch Frischsäure ersetzt werden muß.

Aufgabe der Erfindung ist es daher, ein Verfahren zur
Verfügung zu stellen, bei dem die geschilderten
Nachteile nicht mehr auftreten.

Erfindungsgemäß wird dies dadurch erreicht, daß
ein Teil der freie Schwefelsäure enthaltenden Sulfate
zum Rohstoffaufschluß zurückgeführt wird. Durch diese
Maßnahme wird überraschenderweise weder der Rohstoffaufschluß beeinträchtigt noch eine Qualitätsabnahme
bei den aus den Aufschlußlösungen gewonnenen $TiO_2$-
Pigmenten beobachtet.

Gegenstand der vorliegenden Erfindung ist also ein
Verfahren zur Herstellung von Titandioxid nach dem Sulfatverfahren durch Aufschluß von titanhaltigen Rohstoffen mit Schwefelsäure und anschließender Titanylsulfathydrolyse, Aufkonzentrierung der dabei anfallenden metallsulfathaltigen Dünnsäure zwecks Rückführung
in den Aufschluß, wobei auch die in der Dünnsäure
enthaltenden Metallsulfate zumindest teilweise in
den Aufschluß zurückgeführt werden.

Le A 22 658

Aus diesem Verfahren ergeben sich Vorteile, die im weiteren erläutert werden. Dies sind insbesondere die Wiederverwendung zumindest eines Teils der den Sulfaten anhaftenden Schwefelsäure und gleichzeitig die Rückgewinnung des nicht hydrolysierten Titanylsulfates.

Die Rückführung der Metallsulfate zum Aufschluß kann sowohl durch Rückführung unfiltrierter aufkonzentrierter Dünnsäure als auch durch Rückführung von der Dünnsäure abgetrennter Metallsulfate erfolgen.

Dies geschieht dadurch, daß ein Teil der bis zu 50 % Metallsulfat enthaltenden Suspension, die man beim Aufkonzentrieren der Dünnsäure auf einen Schwefelsäuregehalt von 60 bis 70 % erhält, in den Aufschluß zurückgeführt wird. Die restliche Suspension wird unter solchen Bedingungen gekühlt, daß die Metallsulfate weitgehend in gut filtrierbarer Form kristallisieren. Nach Abtrennung der Sulfate kann die salzarme nicht mehr als 5 % Metallsulfate enthaltende Schwefelsäure geebenenfalls nach einer weiteren Aufkonzentrierung zum $TiO_2$-Rohstoffaufschluß zurückgeführt werden. Nachteilig ist hierbei, daß außer Eisensulfat und Schwefelsäure auch alle anderen Metallsulfate zum Aufschluß zurückgeführt werden und den Prozeß belasten können.

Eine andere Ausführungsform des erfindungsgemäßen Verfahrens besteht darin, daß die Abtrennung der Metallsulfate nach der Aufkonzentrierung der Dünnsäure auf einen Gehalt von 60 bis 70 % $H_2SO_4$ erfolgt.

Le A 22 658

- 4 -   0145984

Besonders vorteilhaft ist es, die Abtrennung der Sulfate aus einem Teil der heißen, auf 60 bis 70 % $H_2SO_4$ (salzfrei) aufkonzentrierten Supension vorzunehmen. Die so abgetrennten Sulfate enthalten relativ viel mehr Eisensulfat. Die aus der Eisensulfatabtrennung erhaltene Säure wird der Metallsulfatkristallisation und -abtrennung zugeführt.

Eine besonders bevorzugte Ausführungsform des erfindungsgemäßen Verfahrens besteht darin, daß die Abtrennung der Metallsulfate nach der Aufkonzentrierung der Dünnsäure auf einen Gehalt von 40 bis 60 % $H_2SO_4$ erfolgt. Die abgetrennten Metallsulfate bestehen dann fast ausschließlich aus Eisenfulfat-Monohydrat.

Wenn es durch die Wasserbilanz beim Aufschluß erforderlich wird, kann die am Eisensulfat-Monohydrat haftende 40 - 60 %ige Säure durch für die Rückführung vorgesehene 60 - 96 %ige Säure verdrängt und wieder in den Eindampfprozeß eingespeist werden.

Durch die Rückführung von Eisenfulfat zum Rohstoffaufschluß wird der $TiO_2$-Aufschlußgrad nicht vermindert sondern wider Erwarten die Gesamt-$TiO_2$-Ausbeute erhöht. Das Verfahren ist unabhängig von den verwendeten $TiO_2$-Rohstoffen anwendbar.

Auf diese Weise angereichertes Eisensulfat kann schließlich als $FeSO_4$ . $7H_2O$ (Grünsalz) aus der

Le A 22 658

Titanylsulfatlösung oder aber aus der Dünnsäure durch Abkühlung kristallisiert und abgetrennt werden.

Dieses abgetrennte Eisensulfat, das rückgeführte Titanylsulfat sowie die an den Metallsulfaten haftende Schwefelsäure entfallen somit bei der kostenintensiven Metallsulfatbeseitigung.

Die schließlich aus dem Prozeß ausgeschleusten Salze werden wie üblich zusammen mit der als Haftfeuchte und/oder Kristallsäure enthaltenen Schwefelsäure thermisch gespalten oder mit CaO, Ca(OH)$_2$ oder CaCO$_3$ umgesetzt.

Die Vorteile des erfindungsgemäßen Verfahrens sollen durch folgende Beispiele verdeutlicht werden, ohne daß dadurch eine Einschränkung der Erfindung gesehen werden soll.

Le A 22 658

Beispiel 1   (Vergleichsbeispiel)

Gemahlener Ilmenit (60 % $TiO_2$) wurde mit einem Gemisch aus 65 %iger, aus Dünnsäure zurückgewonnener, Schwefelsäure (4,3 % Metallsulfate), 96 %iger Schwefelsäure und 27 %igem Oleum aufgeschlossen.

Einsatzstoffe:

| | | |
|---|---|---|
| 1,0 kg Ilmenit | ≙ | 0,600 kg $TiO_2$ |
| 0,727 kg $H_2SO_4$ 65 %ig | ≙ | 0,518 kg $H_2SO_4$ (100 %) |
| 0,438 kg $H_2SO_4$ 96 %ig | ≙ | 0,421 kg $H_2SO_4$ (100 %) |
| 0,819 kg Oleum | ≙ | 0,869 kg $H_2SO_4$ (100 %) |
| | | 1,808 kg $H_2SO_4$ (100 %) |

Das Erz wurde innig mit der 65 und 96 %igen Säure vermischt. Während 5 min wurde das Oleum unter Rühren zugesetzt. Durch die freiwerdende Mischungswärme wurde die exotherme Reaktion gestartet. Die Mischung erreichte eine Temperatur von 195°C.

Nach 3 h Reifezeit wurde der gesamte Aufschlußkuchen abgekühlt, zerkleinert und in so viel Wasser gelöst, daß die Lösung 180 g $TiO_2$/l enthielt. Während des Lösens bei ca. 70°C wurde Eisenpulver zugegeben bis die Lösung einen $Ti^{3+}$-Gehalt von ca. 1,5 g $TiO_2$/l hatte.

Die Rohaufschlußlösung wurde filtriert. Durch Vakuumkühlung wurde der überwiegende Teil des Eisensulfats als Grünsalz $FeSO_4$ . 7 $H_2O$ kristallisiert.

Die verbleibende Lösung wurde auf einen $TiO_2$-Gehalt von 230 g/l eingestellt und nach dem üblichen Verfahren hydrolysiert. Das Hydrolysat wurde gewaschen, gebleicht, mit Rutilkeimen und Einstellchemikalien versetzt und im Drehrohrofen kalziniert. Der erhaltene Rutil wurde gemahlen und nach Standardmethoden untersucht.

Ergebnis:

Titanylsulfatlösung:

| | | |
|---|---|---|
| $TiO_2$, gelöst | ≙ | 570 g |
| Fe-Zahl vor Kristallisation | ≙ | 1,60 |
| Grünsalzabtrennung | ≙ | 1147 g $FeSO_4$.7$H_2O$ |
| Fe-Zahl nach Kristallisation | ≙ | 0,50 |
| Säurezahl | ≙ | 2,02 |

$TiO_2$-Klinker:

| | |
|---|---|
| Helligkeit $R_y$ | 92,7 |
| Gelbstich $R_x$-$R_z$ | 3,1 |
| Aufhellvermögen | 710 |
| Grauwert | 2,7 |

Beispiel 2

Beim Ilmenitaufschluß entsprechend Beispiel 1 wurde Filterkuchen zugesetzt, der bei der Filtration der auf 65 % $H_2SO_4$ eingedampften Dünnsäure anfällt.

Le A 22 658

Der Filterkuchen hatte folgende Zusammensetzung:

| | | |
|---|---|---|
| $H_2SO_4$ | 25,0 | % |
| $FeSO_4$ | 28,56 | % |
| $TiOSO_4$ | 5,13 | % |
| $Al_2(SO_4)_3$ | 7,32 | % |
| $MgSO_4$ | 9,36 | % |

Einsatzstoffe:

| | | |
|---|---|---|
| 1,0 kg Ilmenit | $\hat{=}$ | 0,600 kg $TiO_2$ |
| 0,344 kg Filterkuchen | $\hat{=}$ | 0,009 kg $TiO_2$ |
| | | 0,086 $H_2SO_4$ (100 %) |
| 1,025 kg $H_2SO_4$ 65 %ig | $\hat{=}$ | 0,666 kg $H_2SO_4$ (100 %) |
| 0,995 kg Oleum | $\hat{=}$ | 1,056 kg $H_2SO_4$ (100 %) |
| | | 1,808 kg $H_2SO_4$ (100 %) |

Das Erz wurde mit der 65 %igen Säure und dem Filterkuchen innig gemischt. Durch Zumischen des Oleums während 5 min wurde die exotherme Aufschlußreaktion gestartet. Die Mischung erreichte eine Temperatur von 190°C.

Die weitere Behandlung erfolgte völlig analog zu Beispiel 1.

Le A 22 658

Ergebnis:

Titanylsulfatlösung:

| | | |
|---|---|---|
| $TiO_2$, gelöst | ≙ | 579 g |
| Fe-Zahl vor Kristallisation | ≙ | 1,78 |
| Grünsalzabtrennung | ≙ | 1356 g $FeSO_4 \cdot 7H_2O$ |
| Fe-Zahl nach Kristallisation | ≙ | 0,50 |
| Säurezahl | ≙ | 2,02 |

$TiO_2$-Klinker:

| | |
|---|---|
| Helligkeit $R_y$ | 92,6 |
| Gelbstich $R_x - R_z$ | 3,2 |
| Aufhellvermögen | 705 |
| Grauwert | 2,7 |

## Beispiel 3

Bei einem Aufschlußversuch analog Beispiel 2 wurde anstatt 65 %iger Schwefelsäure und Filterkuchen direkt unfiltrierte Suspension aus der Dünnsäureeindampfung verwendet. Diese Suspension hatte folgende Zusammensetzung:

| | |
|---|---|
| $H_2SO_4$ | 48,0 % |
| $FeSO_4$ | 12,65 % |
| $TiOSO_4$ | 2,26 % |
| $Al_2(SO_4)_3$ | 3,24 % |
| $MgSO_4$ | 4,14 % |

Le A 22 658

Einsatzstoffe:

| | |
|---|---|
| 1,0 kg Ilmenit | ≙ 0,600 kg $TiO_2$ |
| 0,775 kg Sulfatsuspension | ≙ 0,009 kg $TiO_2$ |
| | 0,372 kg $H_2SO_4$ (100%) |
| 0,585 kg $H_2SO_4$ 65 %ig | ≙ 0,380 kg $H_2SO_4$ (100%) |
| 0,995 kg Oleum | ≙ 1,056 kg $H_2SO_4$ (100%) |
| | 1,808 kg $H_2SO_4$ (100%) |

Ilmenit wurde mit der Sulfatsuspension und der 65 %igen Säure innig gemischt. Oleumzugabe und weitere Versuchsdurchführung erfolgten völlig analog zu Beispiel 2.

Ergebnis:

Titanylsulfatlösung:

| | |
|---|---|
| $TiO_2$, gelöst | ≙ 579 g |
| Fe-Zahl vor Kristallisation | ≙ 1,79 |
| Grünsalzabtrennung | ≙ 1360 g $FeSO_4 \cdot 7H_2O$ |
| Fe-Zahl nach Kristallisation | ≙ 0,50 |
| Säurezahl | ≙ 2,02 |

$TiO_2$-Klinker:

| | |
|---|---|
| Helligkeit $R_y$ | 92,7 |
| Gelbstich $R_x - R_z$ | 3,2 |
| Aufhellvermögen | 715 |
| Grauwert | 2,7 |

Die optischen Eigenschaften der erhaltenen $TiO_2$-Klinker liegen im üblichen Rahmen der Meßwertstreuung, so daß die Klinker als gleichwertig anzusehen sind.

Le A 22 658

## Patentansprüche

1. Verfahren zur Herstellung von Titandioxid nach dem Sulfatverfahren durch Aufschluß von titanhaltigen Rohstoffen mit Schwefelsäure und anschließender Titanylsulfathydrolyse und Aufkonzentrierung der dabei anfallenden metallsulfathaltigen Dünnsäure zwecks Rückführung in den Aufschluß, dadurch gekennzeichnet, daß auch die in der Dünnsäure enthaltenen Metallsulfate zumindest teilweise in den Aufschluß zurückgeführt werden.

2. Verfahren gemäß Anspruch 1, dadurch gekennzeichnet, daß die Rückführung der Metallsulfate durch Rückführung unfiltrierter aufkonzentrierter Dünnsäure zum Aufschluß erfolgt.

3. Verfahren gemäß Anspruch 1, dadurch gekennzeichnet, daß die Rückführung der Metallsulfate durch Rückführung von der aufkonzentrierten Dünnsäure abgetrennter Metallsulfate erfolgt.

4. Verfahren gemäß Anspruch 3, dadurch gekennzeichnet, daß die Abtrennung der Metallsulfate unmittelbar nach der Aufkonzentrierung der Dünnsäure auf einen Gehalt von 60 bis 70 % $H_2SO_4$ erfolgt.

Le A 22 658

5.   Verfahren gemäß Anspruch 3, dadurch gekennzeichnet, daß die Abtrennung der Metallsulfate nach der Aufkonzentrierung der Dünnsäure auf einen Gehalt von 40 bis 60 % $H_2SO_4$ erfolgt.

6.   Verfahren gemäß Anspruch 5, dadurch gekennzeichnet, daß die 40 bis 60 %ige den Metallsulfaten anhaftende $H_2SO_4$ durch 60 bis 96 %ige $H_2SO_4$ verdrängt wird und die verdrängte Säure in den Aufkonzentrierungs-Prozeß zurückgeführt wird.

7.   Verfahren gemäß einem der Ansprüche 1 bis 6, dadurch gekennzeichnet, daß nach der Rückführung der Metallsulfate angereichertes $FeSO_4 \cdot 7H_2O$ aus der Titanylsulfatlösung kristallisiert und abgetrennt wird.

8.   Verfahren gemäß einem der Ansprüche 1 bis 6, dadurch gekennzeichnet, daß nach der Rückführung der Metallsulfate angereichertes $FeSO_4 \cdot 7H_2O$ aus der Dünnsäure kristallisiert und abgetrennt wird.

Le A 22 658

Europäisches
Patentamt

**EUROPÄISCHER RECHERCHENBERICHT**

0145984

Nummer der Anmeldung

EP 84 11 3926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 548 343 (FABRIQUES DE PRODUITS CHIMIQUES DE THANN ET DE MULHOUSE S.A.) <br><br> * Seiten 6,7; Zusammenfassung * <br><br> --- | 1-8 | C 22 B 34/12 <br> C 01 G 23/053 |
| A | DE-B-1 067 011 (BÜSCHING & CO) <br><br> * Spalten 4,5; Patentanspruch 1 * <br><br> ----- | 1,2 | |

|  |
|---|
| RECHERCHIERTE SACHGEBIETE (Int. Cl.4) |
| C 22 B 34/12 <br> C 01 G 23/053 <br> C 01 B 17/90 |

Der vorliegende Recherchenbericht wurde für alle Patentansprüche erstellt.

| Recherchenort | Abschlußdatum der Recherche | Prüfer |
|---|---|---|
| DEN HAAG | 28-02-1985 | LIBBERECHT-VERBEECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82